# EUROPEAN PATENT SPECIFICATION

(11) **EP 0 767 817 B1**
(45) Date of publication and mention of the grant of the patent: **10.11.2004**
(21) Application number: 95924295.9
(22) Date of filing: 20.06.1995
(51) Int. Cl.: C09D 133/06, C08G 18/62

(54) **THERMOSET PAINT COMPOSITIONS**
WARMEHARTBARE ÜBERZUGSZUSAMMENSETZUNGEN
COMPOSITIONS DE PEINTURE THERMODURCISSABLES

(30) Priority: 29.06.1994 JP 14812194; 20.04.1995 JP 9556195
(43) Date of publication of application: 16.04.1997
(73) Proprietor: BASF Coatings Aktiengesellschaft, 48165 Münster (DE); NOF CORPORATION, Tokyo (JP)
(72) Inventor: SATO, Atsushi, Yokohama city, Kanagawa (JP); KAWAMURA, Masataka, Fujisawa city, Kanagawa (JP); MONMA, Yasuhiro, Chigasaki city, Kanagawa (JP); SHIBATO, Kishio, Yokohama city, Kanagawa (JP)
(74) Representative: Fitzner, Ulrich, Dr.
(86) International application number: PCT/EP1995/002384
(87) International publication number: WO 1996/000756

(56) References cited:
- DE-A- 1 544 713
- DE-A- 2 065 960
- FR-A- 2 339 631

## Description

This invention concerns thermoset paint compositions and, more precisely, it concerns thermoset paint compositions which are ideal as one-liquid type top-coat paints for automobiles

In recent years, the occurrence of rain spotting due to acid rain has come to be regarded as a problem with automobile paint films for example, and a pressing need has arisen for the development of paints with superior acid resistance, abrasion resistance and durability.
Paint compositions with improved acid resistance due to the compounding of crosslink-forming systems with paint film forming resins and hardening agents have been proposed for resolving such problems.

For example, paint compositions, having hydroxy group containing acrylic resin and/or polyester resin, alkyl etherified melamine resin, non-yellowing poly-functional blocked isocyanate and organo-tin based compound as the principal components with which paint films which have superior acid resistance and abrasion resistance are obtained by including a crosslinking reaction of the principal resin and crosslinking agent and taking the unreacted melamine resin and unreacted hydroxy groups into the crosslinks, have been disclosed in Japanese Patent Kokai H4-246483.
However, these paint compositions present problems in that the permeability of hydrophilic substances such as acids into the paint film is high because the polarity of the acrylic resin or polyester resin which is the principal resin is high, and so it is difficult to obtain a high degree of acid resistance.

Furthermore, paint compositions, having hydroxy group and carboxyl group containing acrylic resin, hydroxy group and epoxy group containing acrylic resin, amino resin and quaternary phosphonium salt as the principal components with which paint films which have superior acid resistance, water resistance, scratching resistance and solvent resistance are obtained by supplementing the hardening reaction of the carboxyl groups and epoxy groups with a hardening reaction with hydroxy groups and amino groups have been disclosed in Japanese Patent Kokai H3-275780.
However, similar problems to those of the aforementioned paint compositions of Japanese Patent Kokai H4-246483 are also encountered with these paint compositions because of the high polarity of the principal resin.

FR-A-2339631 describes a paint composition comprising a copolymer of styrene, methyl methacrylate, hydroxyethyl methacrylate, acrylic acid and glycidyl esters of α-alkylcarboxyl acids. The paint composition comprises a polyisocyanate as crosslinking agent and can be used as top coat for automobiles. Similar coatings are described in DE-A-2065960 and DE-A-1544713. However, no soft monomers within the scope of the instant invention's component (A3) are being used in these references.

### Problems to be Resolved by the Invention

The aim of this present invention is to provide thermoset paint compositions with which paint films which have superior acid resistance, abrasion resistance and durability can be formed, and which have superior storage stability.

### Means of Resolving These Problems

This present invention is the following thermoset paint composition.

It should be noted that throughout the specification reference is made to the hexane tolerance of the described acrylic resin. This hexane tolerance is an inherent property of the acrylic resin if it is obtained as defined in the claim.

Thermosetting paint compositions comprising
(A) an acrylic resin obtained by esterification and polymerization of
   (A1) 10 - 70% by weight of at least one epoxy compound having one epoxy group and no polymerizable unsaturated bond in the molecule,
   (A2) 5 - 70% by weight of at least one vinyl type monomer having a polymerizable double bond and one or more carboxyl group(s) in the molecule, and
   (A3) 10 - 70% by weight of at least one vinyl type monomer selected from the group consisting of 1,4 butanediolmono(meth)acrylate, adducts obtained by adding lactones to hydroxy group containing (meth)acrylates and adducts obtained by adding alkylene oxides to hydroxy group containing (meth)acrylates.
(B) an amino resin and/or blocked isocyanate compound as a hardening agent which is able to react with hydroxyl groups.

In this specification the term "(meth)acryl" signifies "acryl" and/or "methacryl".

The epoxy compound (A1) used in the invention is a compound which has one epoxy group (epoxy ring) in the molecule and which does not have a polymerizable unsaturated bond. It may contain other functional groups which do not have polymerizable double bonds, such as hydroxy groups, as well as the epoxy group, but those which do not contain such groups are preferred.

Actual examples of the epoxy compound (A1) include versatic acid glycidyl ester, p-tert-butylbenzoic acid glycidyl ester, tert-fatty acid glycidyl ester, styrene oxide, cyclohexane oxide, glycidol and alkyl glycidyl esters of carbon number 3-20, alkyl glycidyl ethers of carbon number 3 - 20 and phenyl glycidyl ethers. From among these, versatic acid glycidyl ester and p-tert-butylbenzoic acid glycidyl ester, for example, are preferred.

Commercial products can be used for the epoxy compound (A1). Actual examples of commercial products include Gaajura E10 (versatic acid glycidyl ester, manufactured by the Yuka Shell Epoxy Co.), PES-10 (p-tert-butylbenzoic acid glycidyl ester, manufactured by the Fuso Kagaku Co.), Ekuateeto 9G and Ekuateeto 13G (tertiary fatty acid glycidyl esters, manufactured by the Idemitsu Sekiyo Kagaku Co.).
The epoxy compounds (A1) can be used individually, or they can be used in combinations of two or more types.

The vinyl type monomers (A2) which have carboxyl groups used in this invention are compounds which have a polymerizable double bond and one or more carboxyl group(s) in the molecule. They may contain other functional groups as well as the carboxyl group, but those which do not contain such groups are preferred. The hydroxy group can be cited as an example of another type of functional group.

Actual examples of vinyl type monomers (A2) which have carboxyl groups include acrylic acid, methacrylic acid, ethacrylic acid, propylacrylic acid, isopropylacrylic acid, crotonic acid, maleic acid, fumaric acid, itaconic acid, maleic acid half esters, itaconic acid half esters and acrylic acid dimer. There are also the half esters with acid anhydrides, such as succinic anhydride, phthalic anhydride, hexahydrophthalic anhydride and methylated hexahydrophthalic anhydride, of hydroxy groups containing vinyl monomers, such as glycerine (meth)acrylate, and 2-hydroxyethyl (meth)acrylate, 2-hydroxypropyl (meth)acrylate, 3-hydroxypropyl (meth)acrylate, 1,4-butanediol mono-(meth) acrylate, ε-caprolactone adducts of methacrylic acid and ε-caprolactone adducts of acrylic acid. The vinyl type monomers (A2) can be used individually, or they can be used in combinations of two or more types.

When the soft monomers, such as the ε-caprolactone adducts of acrylic acid, the ε-caprolactone adducts of methacrylic acid or acrylic acid dimer for example, from among the abovementioned (A2) components are used, this can also contribute to abrasion resistance.

The vinyl type monomers (A3) which have no carboxyl group used in the invention are selected from the group consisting of 1,4-butanediol mono(meth)acrylate; lactone adducts wherein a lactone such as ε-caprolactone had been added to a hydroxy group containing (meth)acrylate, such as 2-hydroxyethyl (meth)acrylate, 2-hydroxypropyl (meth)acrylate, 3-hydroxypropyl (meth)acrylate or 1,4-butanediol mono(meth)acrylate; and alkylene oxide adducts wherein an alkylene oxide such as ethylene oxide or propylene oxide has been added to the abovementioned hydroxy group containing (meth)acrylates. From among these, the ethylene oxide or propylene oxide adducts of 2-hydroxyethyl (meth)acrylate, and the ε-caprolactone adducts of 2-hydroxyethyl (meth)acrylate and 1,4-butanediol mono(meth)acrylate, for example, are preferred.

A hydroxy group containing vinyl monomer which has a soft segment (referred to hereinafter as a soft hydroxy group containing vinyl monomer) is used for the (A3) component and makes it possible to improve the abrasion resistance of the paint film in addition to the acid resistance and durability. Here, a hydroxy group containing vinyl monomer which has a soft segment is a vinyl monomer in which there are at least four elements in a linear chain between the vinyl group and the hydroxy group, and in which the hydroxy group is located at the end of the compound, with the proviso that the monomer is selected from the above defined group.

By the use of such soft hydroxy group containing vinyl monomers it is possible to impart elasticity to the paint film which is obtained and so it is possible to form paint films which are soft and have superior abrasion resistance. The soft hydroxy group containing vinyl monomers can be used individually, or they can be used in combinations of two or more types.

The acrylic resins (A) used in the invention are random copolymers obtained by the esterification and polymerization of the aforementioned three components (A1), (A2) and (A3), and they are resins of which the hexane tolerance (referred to hereinafter as the HT) is at least 100, and preferably in the range 120 - 240. The acid resistance of the paint film becomes inadequate in those cases where an acrylic resin of which the hexane tolerance is less than 100 is used, and this is undesirable.

The hexane tolerance is the value which indicates the number of grams of n-hexane which have been added when n-hexane is being added gradually to a dilute solution obtained by diluting 1 gram of resin one hundred times with acetone and the resin solution becomes turbid. The hexane tolerance is an index which indicates the polarity of the resin, and a high value indicates that the polarity of the resin is low. The acid resistance of a paint film increases as the polarity of the resin becomes lower. Hence, the acid resistance of the paint film is increased in this present invention by using an acrylic resin (A) of which the polarity with a hexane tolerance of the aforementioned value is low.

The acrylic resin (A) used in the invention can be manufactured by subjecting a monomer mixture comprising the (A2) and (A3) components to a polymerization reaction in the presence of the aforementioned (A1) component, using a polymerization technique such as solution polymerization, for example, in the usual way. The proportion of each component used at this time is 10 - 70% by weight, and preferably 20 - 60% by weight, for component (A1), 5 - 70% by weight, and preferably 5 - 50% by weight, for component (A2), and 10-70% by weight, and preferably 10 - 60% by weight, for component (A3).

In cases where the amount of soft hydroxy group containing vinyl monomer used is less that 10% by weight with respect to the total amount of the (A1)-(A3) components the improving effect on abrasion resistance is slight, and when it exceeds 70% by weight the acid resistance is reduced.

However, when the proportion of the component (A1) is less than 10% by weight, the acid resistance of the paint film becomes inadequate, and when it exceeds 70% by weight the weather resistance of the paint film is reduced, and so this is undesirable. Furthermore, when the proportion of the component (A2) is less than 5% by weight, the acid resistance becomes inadequate, and when it exceeds 70% by weight the weather resistance is reduced, and so this is undesirable.

The components, in those cases where the three are used in amounts within the aforementioned preferred ranges, give acrylic resins of which the balance of acid resistance and the other paint film properties is very good, and a constant effect is obtained even with compositions in which one component is within the wider range than the preferred range and the other components are within the preferred ranges. The most desirable compositions have all three components within the aforementioned preferred ranges, being combined in such a way that the mol ratio of component (A1)/component (A2) is 0.7 - 1.7, and especially 1.0 - 1.4. When the components are used in these amounts, an acrylic resin (A) which has a high hexane tolerance is obtained, and the acid resistance of the paint film reaches its highest level.

Azobis compounds, such as azobisisobutyronitrile, 4,4'-azobis(4-cyanopentanoic acid) and 2,2'-azobis(2-methyl-N-(2-hydroxy-ethyl)propionamide, and peroxides, such as benzoyl peroxide, t-butylperoxy-2-ethylhexanoate and cumene hydroperoxide, for example, can be used as polymerization initiators in the polymerization reaction, and dodecylmercaptan, mercaptoethanol, --methylstyrene dimer and such like compounds can be used as chain transfer agents. Moreover, quaternary phosphonium salts, quaternary ammonium salts, tertiary amines, organometallic compounds, metal salts of organic acids, imidazoles, Lewis acids and boric acid esters, for example, can be used as catalysts to promote the esterification reaction between the epoxy groups of the component (A1) and the carboxyl groups of the component (A2). Xylene and Sorubesso #100 (trademark), for example, can be used as reaction solvents.

By carrying out a polymerization reaction in this way, the components (A2) and (A3) are randomly polymerized to form a main chain and, at the same time, the carboxyl groups of the (A2) component and the epoxy groups of the (A1) component react together and form ester bonds, and the (A1) component is bonded as side chains. The epoxy rings are opened at this time and hydroxy groups are formed. That is to say, an acrylic resin (A) with side chains comprising the (A1) component of which the epoxy rings have been opened and hydroxy groups have been formed, bonded by ester bonds onto a main chain comprising the (A2) and (A3) components, is obtained.

When hydroxy groups are formed by ring opening of an epoxy ring in the way described above, the hydroxy group is present in the middle part of the side chain and the ends of the side chains are the parts excluding the epoxy ring of the epoxy compound (A1). For example, when tert-butyl benzoic acid glycidyl ester is used for the epoxy compound (A1) the ends of the side chains become t-Bu-C6H5-. With an acrylic resin (A) of this type, the hydroxy groups which are present in the middle part of the side chains are sterically hindered by the terminal groups and so they are protected by the terminal groups, and so the polarity is lower than in a case where the hydroxy groups are at the ends of the side chains. Hence, the permeation of hydrophilic substances such as acids into the paint film can be suppressed by using an acrylic resin (A) of this type, and the acid resistance of the paint film is of a high order.

No particular limitation is imposed upon the molecular weight of the acrylic resin (A), but those of weight average molecular weight 3,000 - 30,000 are preferred. There is a risk of the weather resistance being reduced in those cases where the weight average molecular weight is below 3,000, and there is a risk of the appearance of the paint film being adversely affected in cases where it exceeds 30,000.

Amino resins and/or blocked isocyanates are used as the hardening agent (B) which is able to react with hydroxyl groups in this present invention.

Amino resin and blocked isocyanate can be used individually, but methods in which amino resin and blocked isocyanate are used conjointly and in which a crosslinking reaction with the acrylic resin (A) is included is preferred for forming paint films which have superior acid resistance.

These substances obtained by etherifying the methylolated amino resins obtained by reacting aldehyde with an amino component, such as, for example, melamine, urea, benzoguanamine, acetoguanamine, steroguanamine, spiroguanamine or dicyandiamide, with an appropriate alcohol, such as methanol, ethanol, n-propanol, isopropanol, n-butanol, isobutanol, 2-ethylbutanol or 2-ethylhexanol for example, can be used for the amino resin.

The usual blocked polyisocyanates or non-yellowing blocked polyisocyanates can be used for the blocked isocyanate. Actual examples include aromatic polyisocyanate compounds such as toluene diisocyanate and diphenylmethane diisocyanate; polyisocyanate compounds such as hexamethylene diisocyanate, trimethylhexamethylene diisocyanate, isophorone diisocyanate, hydrogenated diphenylmethane diisocyanate and hydrogenated xylylene diisocyanate; and their adducts, biuret derivatives or isocyanurate derivatives, which have been blocked with the usual isocyanate blocking agents. Phenols, such as phenol, m-cresol, xylenol and thiophenol for example; alcohols, such as methanol, ethanol, butanol, 2-ethylhexanol and cyclohexanol for example, and active hydrogen containing compounds, such as caprolactam, methyl ethyl ketone oxime, pyrazole derivatives, triazole derivatives, ethyl acetoacetate and diethyl malonate for example, can be cited as examples of the abovementioned isocyanate blocking agents.

No particular limitation is imposed upon the compounding proportions of the acrylic resin (A) and the hardening agent (B) used in this invention, but a ratio by weight of component (A)/component (B) of 40 - 90/60 - 10, and preferably of 60 - 80/40 - 20, is desirable. In those cases where the acrylic resin (A) is below the abovementioned lower limit value, the storage stability of the paint composition tends to fall. On the other hand, in those cases where it exceeds the abovementioned upper limit value, the acid resistance of the paint film tends to fall.

As well as the essential components, namely the (A) and (B) components, auxiliary crosslinking components can be compounded as other components in a thermoset paint composition of this present invention. Resin mixtures which contain polyepoxy resin and polycarboxylic acid resin, for example, can be cited as auxiliary crosslinking components. If the polycarboxylic acid resin and polyepoxy resin have hydroxy groups as well as carboxyl groups or epoxy groups then they can also crosslink with the aforementioned hardening agent (B) and it is possible to form paint films which have a high order structure, and so it is possible to raise the acid resistance performance even higher. Colored pigments, metallic pigments, dyes, physical pigments, acid catalysts, hardening catalysts, ultraviolet absorbers, antioxidants, surface controllers, anti-run agents, thickeners and levelling agents, for example, can also be compounded as other components as well as these auxiliary crosslinking components.

The thermoset paint compositions of this present invention can be manufactured by mixing the aforementioned (A) and (B) components and the other components which are compounded as required.
The thermoset paint compositions of this present invention can be compounded with coloured pigments, metallic pigments, dyes or physical pigments, and used as coloured paints (solid colour finishes) or metallic paints for example. They can also be used as clear paints without compounding any pigment at all or by compounding virtually no pigment at all.

No particular limitation is imposed upon the material of an object which is to be painted with a paint comprising a paint composition of this present invention, and the paint can be painted as a top-coat paint directly onto the material of the object which is to be painted, or onto a paint film surface obtained with a primer or a primer/mid-coat on the material of the object which is to be painted. In practical terms, they can be used as top-coat paints for automobiles, other vehicles, buildings and structures for example.

The film thickness is preferably of the order of 10 - 60 µm as a dry film thickness, and the preferred baking conditions for hardening the paint film are some 10 - 40 hours at from about 120°C to about 180°C.

In use as a top-coat paint for automobile purposes, the paints comprising a paint composition of this present invention are preferably used as base-coat enamel paints or top-coat clear paints in a two-coat one-bake or two-coat two-bake system for example, or as a solid colour paint in a one-coat one-bake system, and, they are preferably painted on in such a way as to provide the aforementioned dry film thickness by electrostatic painting or air spray painting, for example, after adjusting the paint viscosity to some 12 - 30 seconds (Ford Cup No.4, 20°C), and a hardened paint film is preferably formed under the aforementioned baking conditions. In cases where a paint comprising a paint composition of this present invention is used as a two-coat one-bake type clear paint, it is possible to use any form of paint, such as a solvent based paint, high-solid paint or water based paint for example, for the base coat enamel paint.

The hardened paint films obtained in this way have a low polarity, the unreacted hydroxy groups being protected by steric hinderance, and so permeation into the paint film is suppressed, even with water of low pH, such as acid rain, and consequently hydrolytic breakdown of the crosslinking parts is reduced and so the acid resistance and durability are excellent. Furthermore, the reactivity of the hydroxy group of component (A3) is high and it reacts readily with the hardener (B) and so it does not remain in an unreacted form and, consequently, a paint film which has superior abrasion resistance in addition to acid resistance and durability is obtained.

The thermoset paint compositions of this present invention are obtained by way of an esterification reaction of the hydroxyl groups of the acrylic resin used as the principal resin with epoxy groups and carboxyl groups and so the hydroxy groups are protected by way of steric hinderance by the groups on the ends of the side chains, and the polarity of the acrylic resin is reduced and so a paint film which has superior acid resistance and durability is obtained, and it also has superior storage stability. Furthermore, a paint film which has superior abrasion resistance in addition to acid resistance and durability is obtained.

## Claims

1. Thermosetting paint compositions comprising
(A) an acrylic resin obtained by esterification and polymerization of
(A1) 10 - 70% by weight of at least one epoxy compound having one epoxy group and no polymerizable unsaturated bond in the molecule,
(A2) 5 - 70% by weight of at least one vinyl type monomer having a polymerizable double bond and one or more carboxyl group(s) in the molecule, and
(A3) 10 - 70% by weight of at least one vinyl type monomer selected from the group consisting of 1,4 butanediolmono(meth)acrylate, adducts obtained by adding lactones to hydroxy group containing (meth)acrylates and adducts obtained by adding alkylene oxides to hydroxy group containing (meth) acrylates.
(B) an amino resin and/or blocked isocyanate compound as a hardening agent which is able to react with hydroxyl groups.

2. Use of thermosetting paint compositions according to claim 1 as top coat paints for automobiles.

3. Use of thermosetting paint compositions according to claim 1 as clear coat paints for automobiles.

## Patentansprüche

1. Wärmehärtende Lackzusammensetzungen, die folgendes umfassen:
(A) ein Acrylharz, das erhalten wird durch Veresterung und Polymerisation von
(A1) 10-70 Gew.-% mindestens einer Epoxyverbindung mit einer Epoxygruppe und ohne polymerisierbare ungesättigte Bindung im Molekül,
(A2) 5-70 Gew.-% mindestens eines Monomers des Vinyltyps mit einer polymerisierbaren Doppelbindung und einer oder mehreren Carboxylgruppe(n) im Molekül und
(A3) 10-70 Gew.-% mindestens eines Monomers des Vinyltyps, das aus der Gruppe ausgewählt ist, die aus 1,4-Butandiolmono(meth)acrylat, Addukten, die durch Addition von Lactonen an Hydroxygruppen enthaltende (Meth)Acrylate erhalten werden, und Addukten, die durch Addition von Alkylenoxiden an Hydroxygruppen enthaltende (Meth)Acrylate erhalten werden, besteht.
(B) einem Aminoharz und/oder einer blockierten Isocyanatverbindung als Härtemittel, das mit Hydroxygruppen umgesetzt werden kann.

2. Verwendung wärmehärtender Lackzusammensetzungen nach Anspruch 1 als Deckschichtlacke für Automobile.

3. Verwendung wärmehärtender Lackzusammensetzungen nach Anspruch 1 als Klarlacke für Automobile.

## Revendications

1. Compositions de peinture thermodurcissables comprenant
(A) une résine acrylique obtenue par estérification et polymérisation de
(A1) 10 - 70% en poids d'au moins un composé époxy comportant un groupe époxy et ne comportant aucune liaison insaturée polymérisable dans la molécule,
(A2) 5 - 70% en poids d'au moins un monomère vinylique comportant une double liaison polymérisable et un ou plusieurs groupes carboxyle dans la molécule, et
(A3) 10 - 70% en poids d'au moins un monomère vinylique choisi dans le groupe constitué par le mono(méth)acrylate de 1,4-butanediol, les composés d'addition obtenus par addition de lactones à des (méth)acrylates hydroxylés et les composés d'addition obtenus par addition d'oxydes d'alkylène à des (méth)acrylates hydroxylés,
(B) une résine aminée et/ou un composé isocyanate bloqué comme agent durcisseur qui est capable de réagir avec des groupes hydroxyle.

2. Utilisation de compositions de peinture thermodurcissables selon la revendication 1 comme peintures de couche de finition pour automobiles.

3. Utilisation de compositions de peinture thermodurcissables selon la revendication 1 comme peintures de couche de vernis pour automobiles.
